# DEMANDE DE BREVET EUROPEEN

(11) **EP 2 161 328 A1**
(43) Date de publication de la demande: **10.03.2010**
(21) Numéro de dépôt: 09168848.1
(22) Date de dépôt: 27.08.2009
(51) Int. Cl.: C11B 3/04, C11B 13/00

(54) **Procédé de traitement de déchets gras**

(30) Priorité: 05.09.2008 FR 0855975
(71) Demandeur: VEOLIA PROPRETE, 92000 Nanterre (FR)
(72) Inventeur: Lafosse, Laurence, 78955 Carrières sous Poissy (FR); Bellynck, Olivier, 94200 Yvry sur Seine (FR); Georgeaud, Vincent, 78125 Poigny La forêt (FR); Lefèbvre, Fabrice, 60270 Gouvieux (FR); Robino, Tristan, 60520 Thiers sur Thève (FR)
(74) Mandataire: Bentz, Jean-Paul

(57) **Abrégé**

L'invention concerne un procédé de traitement de déchets gras permettant une meilleure valorisation, notamment en tant que combustible.

Selon l'invention, ce procédé est essentiellement **caractérisé en ce qu**'il comprend un traitement chimique des déchets gras (1, 1'), lors duquel on mélange ces déchets gras (1, 1') avec de l'eau (8) et un réactif acide (7), pour obtenir une phase grasse déminéralisée exempte d'éléments minéraux appartenant aux familles des alcalins et des alcalino-terreux, et une phase aqueuse incluant éventuellement des résidus solides sous forme de précipités ; puis, un traitement mécanique lors duquel on soumet le mélange obtenu à une séparation mécanique (11) par décantation ou filtration, pour séparer la phase grasse déminéralisée de la phase aqueuse.

## Description

La présente invention concerne, de façon générale, le domaine du traitement des déchets, notamment en vue de leur utilisation en tant que combustible.

Plus précisément, l'invention concerne un procédé de traitement de déchets gras, notamment en vue de leur utilisation en tant que combustible.

Plus particulièrement, l'invention s'applique aux déchets gras provenant de l'industrie agro-alimentaire ou cosmétique, notamment de leurs ouvrages de décantation, ou d'établissements de restauration et de préparation d'aliments, ou d'ouvrages de prétraitements des eaux usées urbaines ou industrielles tels que des dégraisseurs et des déshuileurs, ou encore d'établissements d'équarrissage.

Ces déchets gras sont constitués principalement d'une fraction grasse, d'une fraction aqueuse, et d'une fraction résiduelle.

Les déchets gras concernés par l'invention, hétérogènes dans leur composition, peuvent être solides et/ou liquides et peuvent être constitués de multiples types d'huiles végétales et/ou de graisses animales.

L'invention s'applique tout particulièrement à la fraction grasse, qui peut contenir au moins 90% de matière organique sur sec mais également jusqu'à 10% de cendres sur sec.

Les cendres correspondent aux matières minérales contenues dans un échantillon de déchets gras, et plus particulièrement aux éléments minéraux appartenant, dans le tableau périodique des éléments de Mendeleïev, à la famille des alcalins (Li, Na, K, Rb, Cs, Fr) et/ou à celle des alcalino-terreux (Be, Mg, Ca, Sr, Ba, Ra).

Cette fraction grasse possède un fort pouvoir calorifique qui lui permet d'être valorisée énergétiquement. Son pouvoir calorifique inférieur, ou PCI, peut être compris entre 33,494.10⁶ et 37,681.10⁶ joule/kg (soit entre 8000 et 9000 kcal/kg).

Toutefois, la valorisation énergétique est limitée en raison du fort taux de matières minérales contenues dans la fraction grasse.

Par exemple, les constructeurs de brûleurs recommandent un taux de matières minérales maximum de 0,03% en poids, voire même de 0,01% en poids, dans le cas des moteurs de cogénération, alors que la fraction grasse, dont il est question dans cette invention, contient jusqu'à 10% de matières minérales sur sec.

A l'heure actuelle, la combustion en chaudière d'une fraction grasse entraîne un encrassement important ainsi que de forts rejets en poussières dans les fumées. Sa combustion en moteur, de véhicule ou de cogénération, entraînerait des dysfonctionnements mécaniques.

En conséquence, la voie de valorisation de cette fraction grasse est à ce jour réduite à l'utilisation dans des fours industriels ou dans des fours de cimenterie.

Dans ce contexte, la présente invention a pour but de proposer un procédé de traitement de déchets gras exempt de l'une au moins des limitations évoquées ci-dessus et en particulier permettant d'améliorer la valorisation de ces déchets.

Dans ce but, l'invention concerne un procédé de traitement de déchets gras, **caractérisé en ce qu**'il comprend un traitement chimique des déchets gras, lors duquel on mélange les déchets gras avec de l'eau et un réactif acide, pour obtenir une phase grasse déminéralisée et une phase aqueuse incluant éventuellement des résidus solides sous forme de précipités ; puis, un traitement mécanique lors duquel on soumet le mélange obtenu à une séparation mécanique par décantation ou filtration, pour séparer la phase grasse déminéralisée de la phase aqueuse.

La phase grasse déminéralisée selon l'invention est ainsi exempte des éléments minéraux appartenant aux familles des alcalins et/ou alcalino-terreux.

La déminéralisation des déchets gras par traitement chimique correspond à l'élimination des_éléments minéraux appartenant, dans le tableau périodique des éléments de Mendeleïev, à la famille des alcalins (Li, Na, K, Rb, Cs, Fr) et/ou à celle des alcalino-terreux (Be, Mg, Ca, Sr, Ba, Ra).

L'analyse du taux de ces matières minérales est un indicateur de performance de la réaction de déminéralisation. Cette analyse consiste à effectuer une combustion complète, ou calcination, à une température variant de 550°C à 815°C selon les normes appliquées, par exemple à 550°C pour la biomasse, à 775°C pour les produits pétroliers selon la norme NF EN ISO 6245, ou à 815°C pour le charbon selon la norme NF M 03-003.

Selon une version avantageuse de l'invention, les déchets gras proviennent de l'industrie agro-alimentaire ou cosmétique, et notamment de leurs ouvrages de décantation, ou d'établissements de restauration et de préparation d'aliments, ou d'ouvrages de prétraitements des eaux usées urbaines ou industrielles tels que des dégraisseurs ou des déshuileurs, ou d'établissements d'équarrissage.

Les déchets gras peuvent être constitués principalement d'une fraction grasse, d'une fraction aqueuse, et d'une fraction résiduelle, et être traités, préalablement au procédé de l'invention, pour ne conserver que la fraction grasse contenant au moins 90%, et de préférence entre 90 et 99%, de matière organique sur sec et au plus 10%, et de préférence entre 1 et 10%, de cendres sur sec.

La teneur sur sec, en matière organique ou en cendres, correspond à la teneur, en matière organique ou en cendres, d'un extrait sec de fraction grasse, c'est-à-dire d'un extrait de fraction grasse dépourvu d'eau.

Plus particulièrement, la séparation mécanique du procédé selon l'invention peut se faire par décantation accélérée ou par décantation gravitaire, ou encore par filtration de surface, sous pression ou non, à chaud, et par exemple avec une maille comprise entre 20 microns et 1 mm, ou de préférence entre 50 microns et 1 mm.

On mélange préférentiellement les déchets gras, l'eau et le réactif acide à une température comprise entre 45 et 130°C.

De manière avantageuse, on mélange les déchets gras, l'eau et le réactif acide sous agitation, pour homogénéiser le mélange.

La quantité d'eau mélangée aux déchets gras est par exemple comprise entre 1/10ème et la moitié du volume de déchets gras, et est de préférence de l'ordre d'un quart de ce volume.

De préférence, l'eau, avant d'être mélangée aux déchets gras, est à température ambiante ou à une température comprise entre 30 et 100°C, et tout préférentiellement entre 50 et 70°C.

L'eau peut être de l'eau déminéralisée, ou de l'eau potable, ou encore de l'eau de process assez propre. On entend par « eau de process » l'eau utilisée dans une installation industrielle pour le fonctionnement d'un procédé ou la fabrication d'un produit.

D'après un mode de réalisation préférentiel de l'invention, la quantité de réactif acide mélangé aux déchets gras est comprise entre 0,5 et 10% du volume de déchets gras, et de préférence entre 0,5 et 4% de ce volume.

De manière avantageuse, la quantité de réactif acide mélangé aux déchets gras est proportionnelle au taux de cendres contenues dans ces déchets.

Le réactif acide mélangé aux déchets gras est avantageusement constitué d'au moins un acide choisi dans le groupe constitué par les acides minéraux, tels que ceux de formule HCl, H₃PO₄, HNO₃, ou H₂SO₄, et les acides organiques ayant un pKa inférieur au pH des déchets gras en milieu aqueux, par exemple l'acide formique HCOOH pour des déchets gras présentant un pH de l'ordre de 4,5 en milieu aqueux.

Selon une version particulière de l'invention, le traitement chimique des déchets gras consiste principalement à ce que les déchets gras soient d'abord mélangés à une petite quantité d'eau comprise entre 10 et 30% de la quantité totale d'eau à mélanger aux déchets gras, ce mélange étant homogénéisé et chauffé jusqu'à atteindre une température comprise entre 45 et 130°C, puis à ce que le reste de la quantité totale d'eau à mélanger aux déchets gras et le réactif acide soient ajoutés simultanément au dit mélange.

De préférence, on mélange les déchets gras avec l'eau et le réactif acide pendant une durée de réaction comprise entre 5 minutes et 3 heures, et plus préférentiellement pendant une durée de réaction de l'ordre de 45 minutes, sous agitation permanente ou intermittente.

Le procédé selon l'invention peut comprendre en outre, avant le mélange des déchets gras avec l'eau et le réactif acide, une première filtration des déchets gras pour en éliminer les impuretés.

Cette première filtration est par exemple une filtration de surface sous pression, réalisée avec une maille de taille comprise entre 20 microns et 1 mm, ou de préférence entre 50 microns et 1 mm, ou tout préférentiellement de taille de l'ordre de 250 microns.

A la suite du traitement mécanique, une deuxième filtration de la phase grasse déminéralisée peut aussi être réalisée.

Cette deuxième filtration est de préférence une filtration de surface, sous pression ou non, à chaud, et réalisée avec une maille de taille comprise entre 20 microns et 1 mm, ou de préférence entre 50 microns et 1 mm.

De manière avantageuse, le mélange obtenu après le traitement chimique est chauffé pour le traitement mécanique.

La phase grasse déminéralisée, obtenue après le traitement chimique des déchets gras puis le traitement mécanique, peut ainsi être valorisée.

Selon une version particulière de l'invention, la phase grasse déminéralisée, obtenue après le traitement chimique des déchets gras puis le traitement mécanique, et avant d'être valorisée, est stockée et chauffée, d'éventuels résidus décantés pendant ce stockage étant éliminés de ladite phase grasse déminéralisée.

Ainsi, le procédé selon l'invention permet de débarrasser des déchets gras de leur matière minérale, afin de pouvoir les valoriser dans n'importe quelle voie de valorisation énergétique, quelle que soit leur origine.

Le procédé de traitement de déchets gras, et plus particulièrement de fractions grasses, selon l'invention permet d'éliminer les matières minérales appartenant aux familles des alcalins et/ou des alcalino-terreux et d'obtenir un taux de cendres inférieur à 0,1% en poids, voire inférieur à 0,03% en poids.

Cette réduction du taux de matières minérales permet en particulier de valoriser les déchets gras et/ou la fraction grasse sur le site même de leur production, en tant que combustible en chaudière par exemple, ce qui réduit les coûts liés au transport et donc les émissions en dioxyde de carbone par rapport à l'envoi auparavant de ces déchets gras et/ou de cette fraction grasse dans des cimenteries ou des fours industriels à des distances non négligeables du site de production.

D'autre part, cet abattement du taux de matières minérales permet d'utiliser les déchets gras déminéralisés en substitution à des combustibles plus polluants d'un point de vue environnemental tel que le fioul lourd, dans de nouvelles applications, telles que des chaudières urbaines ou industrielles, des moteurs de cogénération, des moteurs de véhicules après leur transformation en biocarburant.

De plus, l'utilisation en tant que combustibles de déchets gras après leur traitement selon le procédé de l'invention présente l'avantage de dégager des fumées qui ne nécessitent pas de traitement supplémentaire avant leur rejet dans l'atmosphère, et également d'éviter l'encrassement des installations de combustion.

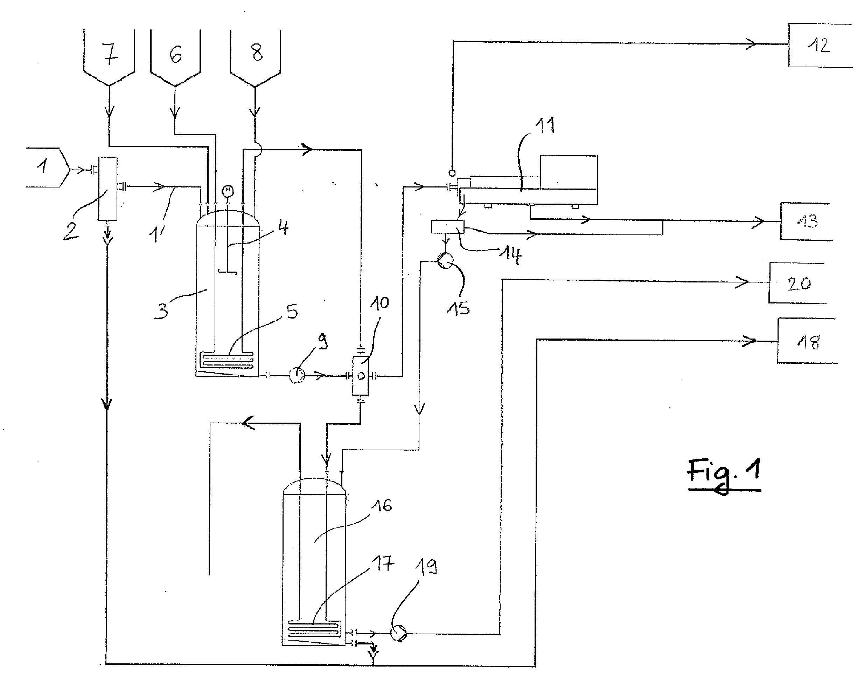

D'autres caractéristiques et avantages de l'invention ressortiront clairement de la description détaillée qui en est faite ci-après, à titre indicatif et nullement limitatif, en référence à la figure 1 annexée qui représente schématiquement une installation adaptée à la mise en oeuvre du procédé selon l'invention.

Des déchets gras 1 à traiter, et plus préférentiellement la fraction grasse de ces déchets gras préalablement débarrassés (non représenté) de leur fraction aqueuse et d'une fraction résiduelle, sont amenés à l'installation de la figure 1.

Les déchets gras 1 sont d'abord filtrés dans un premier filtre 2 afin d'en éliminer le plus d'impuretés possible.

Cette filtration peut être une filtration de surface sous pression, réalisée à une maille comprise entre 20 microns et 1 mm, ou de préférence entre 50 microns et 1 mm, et plus préférentiellement à une maille de l'ordre de 250 microns.

Puis, les déchets gras filtrés 1' sont amenés dans une cuve 3 de réaction pour y subir un traitement chimique.

Cette cuve 3 est de préférence équipée d'un agitateur 4, d'un élément de chauffage tel qu'un tube réchauffé 5 immergé dans la cuve 3 et alimenté en eau chaude 6, ainsi que d'un détecteur de niveau. Elle est avantageusement calorifugée.

Dans cette cuve 3 de réaction, sont ajoutés le réactif acide 7 et de l'eau 8.

Les réactifs introduits dans la cuve 3 forment un mélange qui est homogénéisé à l'aide de l'agitateur 4.

L'agitation, qui consiste en un mélange liquide-liquide miscible, est réalisée préférentiellement avec un mobile à débit axial.

L'agitateur 4 peut fonctionner en mode pompage.

Le régime hydrodynamique dans la cuve 3 est de préférence à faible cisaillement.

La cuve 3 de réaction est chauffée à l'aide du tube réchauffé 5 qui induit une température dans la cuve comprise entre 45 et 130°C, et de préférence entre 50 et 90°C.

La quantité d'eau 8 totale à ajouter dans la cuve 3 est comprise entre un dixième et la moitié du volume de déchets gras 1 ou 1', et est de préférence de l'ordre d'un quart de ce volume.

L'eau 8 dans la cuve 3 peut être à température ambiante ou chaude, c'est-à-dire à une température comprise entre 30 et 100°C, ou de préférence entre 50 et 70°C. L'eau 8 est préalablement chauffée grâce à une chaudière par exemple.

L'eau ajoutée peut être notamment de l'eau déminéralisée, de l'eau potable, ou de l'eau de process assez propre.

La quantité de réactif acide 7 à ajouter dans la cuve 3 est comprise entre 0,5 et 10% du volume de déchets gras 1 ou 1', soit entre 0,07 et 1,5 Eq H⁺ par litre de déchets gras comportant jusqu'à 10% de cendres sur sec et entre 90 et 99% de matière organique sur sec. De préférence, cette quantité est comprise entre 0,5 et 4% du volume de déchets gras, soit entre 0,07 et 0,6 Eq H⁺ par litre de déchets gras.

Pour permettre l'abattement des matières minérales dans des déchets gras selon l'invention, le réactif acide 7 ajouté peut être un acide minéral tel que l'acide chlorhydrique HCl, l'acide phosphorique H₃PO₄, l'acide nitrique HNO₃, et l'acide sulfurique H₂SO₄, ou un acide organique ayant un pKa suffisamment bas et inférieur au pH des déchets gras en milieu aqueux, par exemple l'acide formique HCOOH, dont le pKa est de 3,75, ou encore un mélange de ces acides.

Pour le choix du réactif acide, en plus du taux d'abattement des matières minérales, les critères suivants peuvent être considérés : la disponibilité en quantité industrielle du réactif, l'absence de dégradation des graisses des déchets gras par le réactif, une température d'ébullition du réactif adaptée et notamment supérieure à 100°C, l'absence de dégagements nocifs lors du traitement chimique, et l'absence de corrosion du matériau de la cuve 3 de réaction par le réactif.

Par exemple, quand la cuve 3 est en acier inoxydable, on préfère utiliser l'acide phosphorique, qui ne corrode pas les parois de la cuve.

Les réactifs, c'est-à-dire les déchets gras 1', ou plus particulièrement la fraction grasse, l'eau 8 et le réactif acide 7, peuvent être injectés dans la cuve 3 de réaction dans différents ordres.

Préférentiellement, les déchets gras 1', ou la fraction grasse, sont amenés en premier dans la cuve 3. Puis est ajoutée une petite quantité d'eau 8 pour favoriser le contact entre les réactifs dans la cuve 3. Cette petite quantité est par exemple comprise entre 10 et 30% de la quantité totale d'eau 8 à injecter dans la cuve 3.

Ce premier mélange est homogénéisé et chauffé, jusqu'à atteindre la température idéale pour le traitement chimique, comprise entre 45 et 130°C.

Puis, la quantité d'eau 8 restante, par rapport au volume total d'eau 8 à ajouter, et le réactif acide 7 sont injectés simultanément au premier mélange pour obtenir un deuxième mélange.

La durée totale du traitement chimique dans la cuve 3 est de manière avantageuse comprise entre 5 minutes et 3 heures, sous homogénéisation permanente ou intermittente. De préférence, la réaction dans la cuve 3 est réalisée pendant 45 minutes.

Après réaction dans la cuve 3, le deuxième mélange est transféré par l'intermédiaire d'une pompe 9 vers un échangeur thermique 10, qui peut être de type à plaque, à serpentin, ou à spirale.

Le passage du mélange dans cet échangeur thermique 10 a pour but de monter la température de ce mélange avant son traitement mécanique afin qu'il reste suffisamment liquide au cours de ce traitement.

De préférence, le mélange est porté à une température d'au moins 80°C avant le traitement mécanique.

Le mélange réactionnel atteint ensuite, toujours grâce à la pompe 9, un moyen de séparation mécanique tel qu'une centrifugeuse 11.

Cette séparation mécanique a pour but de séparer la phase grasse déminéralisée pendant le traitement chimique, d'une phase aqueuse et de résidus précipités.

Cette séparation peut se faire par décantation accélérée à l'aide d'une essoreuse ou d'une centrifugeuse bi- ou tri-phasique, ou également par décantation gravitaire dans une cuve simple ou dans un décanteur, élaboré ou non, ou encore par filtration de surface, sous pression ou non, à chaud, avec une maille comprise entre 20 microns et 1 mm, ou de préférence entre 50 microns et 1 mm.

La phase aqueuse 12 et les résidus précipités 13 sont ensuite traités ou éliminés par la meilleure voie répondant à leurs caractéristiques respectives.

En sortie de la centrifugeuse 11, la phase grasse ainsi purifiée est soumise à un deuxième filtre 14. La filtration alors réalisée peut être une filtration de surface, sous pression ou non, à chaud, avec une maille comprise entre 20 microns et 1 mm, ou de préférence entre 50 microns et 1 mm.

Via une pompe 15, la phase grasse, purifiée et filtrée, peut alors rejoindre une cuve 16 de stockage, semblable à la cuve 3 de réaction, chauffée avec un tube 17 semblable à celui placé dans la cuve 3, mais sans agitateur.

Les éventuels résidus 18 décantés en fond de cuve 16 de stockage sont éliminés, par exemple par la même voie que les résidus solides obtenus en sortie du premier filtre 2.

La phase grasse purifiée et stockée peut être amenée, par l'intermédiaire d'une pompe 19 à une voie de valorisation 20.

Les pompes 9, 15 et 19 sont par exemple des pompes volumétriques, de type rotatif ou alternatif.

La phase grasse peut autrement être envoyée vers une voie de valorisation (non représenté) en sortie de centrifugeuse 11, ou en sortie du deuxième filtre 14.

### Exemple 1

Dans cet exemple, le procédé selon l'invention est mis en oeuvre avec un traitement mécanique soit par décantation gravitaire, soit par décantation accélérée, ou centrifugation.

Les essais réalisés et les résultats obtenus sont résumés dans le tableau 1.

Différents échantillons de fraction grasse ont été traités chimiquement à un taux volumique de réactif acide de 1,6%, puis séparés par décantation gravitaire pendant 24 heures, ou par décantation accélérée.

**Tableau 1 :**

| | Caractéristiques initiales de la fraction grasse | | Caractéristiques finales de la fraction grasse traitée | | |
|---|---|---|---|---|---|
| | MS brut moyenne | MM brut moyenne | Rendement moyen | MS moyenne | MM moyenne |
| Décantation gravitaire | 95,85% | 1,75% | 75,45% | 97,87% | 0,09% |
| Décantation accélérée | 95,28% | 1,70% | 92,02% | 97,57% | 0,04% |

| | | | | | |
|---|---|---|---|---|---|
| MS = matière sèche ; MM = matière minérale. | | | | | |

Dans les deux cas de décantation, la quantité de matières minérales dans les échantillons de fraction grasse est divisée par plus de la moitié.

Pour des fractions grasses de caractéristiques initiales quasi identiques, le rendement moyen de l'opération est meilleur pour la décantation accélérée que pour la décantation gravitaire.

### Exemple 2

Dans cet exemple, le procédé de l'invention est mis en oeuvre avec un traitement chimique réalisé selon différents ordres d'ajout des réactifs, puis un traitement mécanique par décantation accélérée.

Le tableau 2 résume les résultats obtenus pour différents échantillons de fraction grasse traités selon quatre ordres d'injection différents :
- Ordre 1 : la fraction grasse puis simultanément le mélange eau-réactif acide ;
- Ordre 2: la fraction grasse puis l'eau puis le réactif acide ;
- Ordre 3 : le mélange eau-réactif acide puis la fraction grasse;
- Ordre 4 : la fraction grasse puis une partie de l'eau (entre 10 et 30% de la quantité totale d'eau à injecter), puis simultanément la quantité d'eau restante et le réactif acide.

**Tableau 2 :**

| | Caractéristiques initiales de la fraction grasse | | Caractéristiques finales de la fraction grasse traitée | | | |
|---|---|---|---|---|---|---|
| | MS brut moyenne | MM brut moyenne | Rendement moyen | MS moyenne | MM moyenne | Abattement MM moyen |
| Ordre 1 | 96,34% | 1,49% | 93,30% | 96,62% | 0,09% | 92,87% |
| Ordre 2 | 94,64% | 1,77% | 89,66% | 97,27% | 0,04% | 97,69% |
| Ordre 3 | 94,74% | 1,79% | 85,64% | 97,16% | 0,12% | 93,47% |
| Ordre 4 | 95,85% | 1,75% | 93,14% | 98,62% | 0,02% | 98,47% |

| | | | | | | |
|---|---|---|---|---|---|---|
| MS = matière sèche ; MM = matière minérale. | | | | | | |

Quelque soit l'ordre d'injection, la matière minérale de la fraction grasse est bien éliminée, avec un haut rendement de réaction (>85%) et le taux de cendres cible (≤ 0,1% sur sec) atteint.

Pour des échantillons de fractions grasses de qualités proches, c'est l'ordre d'injection N°4 qui fonctionne le mieux. Il présente en effet le meilleur rapport rendement moyen / MM moyenne.

Ces ordres d'injection ne sont pas exhaustifs. Notamment, le réactif acide peut être injecté en deux fois, comme l'eau selon l'ordre 4 ci-dessus.

Le procédé selon l'invention peut être utilisé dans le domaine du traitement des déchets gras en vue de leur utilisation en tant que combustible, ou encore dans le domaine de la lipochimie.

## Revendications

1. Procédé de traitement de déchets gras, **caractérisé en ce qu'**il comprend:
- un traitement chimique des déchets gras (1, 1'), lors duquel on mélange ces déchets gras (1, 1') avec de l'eau (8) et un réactif acide (7), pour obtenir une phase grasse déminéralisée exempte d'éléments minéraux appartenant aux familles des alcalins et des alcalino-terreux, et une phase aqueuse incluant éventuellement des résidus solides sous forme de précipités ;
- puis, un traitement mécanique lors duquel on soumet le mélange obtenu à une séparation mécanique (11) par décantation ou filtration, pour séparer la phase grasse déminéralisée de la phase aqueuse.

2. Procédé selon la revendication 1, dans lequel les déchets gras (1, 1') proviennent de l'industrie agro-alimentaire ou cosmétique, et notamment de leurs ouvrages de décantation, ou d'établissements de restauration et de préparation d'aliments, ou d'ouvrages de prétraitements des eaux usées urbaines ou industrielles tels que des dégraisseurs ou des déshuileurs, ou d'établissements d'équarrissage.

3. Procédé selon la revendication 1 ou 2, dans lequel les déchets gras (1, 1') sont constitués principalement d'une fraction grasse, d'une fraction aqueuse, et d'une fraction résiduelle, et sont préalablement traités pour ne conserver que la fraction grasse contenant au moins 90% de matière organique sur sec et au plus 10% de cendres sur sec.

4. Procédé selon l'une quelconque des revendications 1 à 3, dans lequel on mélange les déchets gras (1, 1'), l'eau (8) et le réactif acide (7) à une température comprise entre 45 et 130°C, de préférence entre 50 et 90°C.

5. Procédé selon l'une quelconque des revendications 1 à 4, dans lequel on mélange les déchets gras (1, 1'), l'eau (8) et le réactif acide (7) sous agitation (4), pour homogénéiser le mélange.

6. Procédé selon l'une quelconque des revendications 1 à 5, dans lequel la quantité d'eau (8) mélangée aux déchets gras (1, 1") est comprise entre 1/10ème et la moitié du volume de déchets gras (1, 1'), et est de préférence de l'ordre d'un quart de ce volume.

7. Procédé selon l'une quelconque des revendications 1 à 6, dans lequel la quantité de réactif acide (7) mélangé aux déchets gras (1, 1') est comprise entre 0,5 et 10% du volume de déchets gras (1, 1'), et de préférence entre 0,5 et 4% de ce volume.

8. Procédé selon l'une quelconque des revendications 1 à 7, dans lequel le réactif acide (7) mélangé aux déchets gras (1, 1') est constitué d'au moins un acide choisi dans le groupe constitué par les acides minéraux, tels que ceux de formule HCl, H₃PO₄, HNO₃, ou H₂SO₄, et les acides organiques ayant un pKa inférieur au pH des déchets gras en milieu aqueux, par exemple l'acide formique HCOOH pour des déchets gras présentant un pH de l'ordre de 4,5 en milieu aqueux.

9. Procédé selon l'une quelconque des revendications 1 à 8, dans lequel le traitement chimique des déchets gras (1, 1') consiste principalement à ce que les déchets gras (1, 1') soient d'abord mélangés à une petite quantité d'eau (8) comprise entre 10 et 30% de la quantité totale d'eau (8) à mélanger aux déchets gras (1, 1'), ce mélange étant homogénéisé et chauffé jusqu'à atteindre une température comprise entre 45 et 130°C, puis à ce que le reste de la quantité totale d'eau (8) à mélanger aux déchets gras (1, 1') et le réactif acide (7) soient ajoutés simultanément au dit mélange.

10. Procédé selon l'une quelconque des revendications 1 à 9, dans lequel on mélange les déchets gras (1, 1') avec l'eau (8) et le réactif acide (7) pendant une durée de réaction comprise entre 5 minutes et 3 heures, et de préférence pendant une durée de réaction de l'ordre de 45 minutes, sous agitation (4) permanente ou intermittente.

11. Procédé selon l'une quelconque des revendications 1 à 10, dans lequel le mélange obtenu après le traitement chimique est chauffé pour le traitement mécanique.
